# EUROPEAN PATENT APPLICATION

(11) **EP 4 470 716 A1**
(43) Date of publication of application: **04.12.2024**
(21) Application number: 22926021.1
(22) Date of filing: 30.08.2022
(51) Int. Cl.: B23Q 17/09, B23Q 17/00, B23Q 17/24, G01B 11/24

(54) **IMAGING DEVICE, TOOL CONTAINING DEVICE, AND MACHINE TOOL**

(30) Priority: 14.02.2022 JP 2022020155
(71) Applicant: DMG Mori Co., Ltd., Yamatokoriyama-shi, Nara 639-1160 (JP)
(72) Inventor: KANTO, Kenta, Yamatokoriyama-shi, Nara 639-1160 (JP)
(74) Representative: Isarpatent
(86) International application number: PCT/JP2022/032515
(87) International publication number: WO 2023/153004

(57) **Abstract**

An imaging device includes a tool support that supports a tool, a light source that irradiates the tool supported by the tool support with light, a projection part located opposite the light source with respect to the tool supported by the tool support, and an imaging unit that images a projection image of the tool displayed on the projection part by the light emitted from the light source.

## Description

### Technical Field

The present invention relates to an imaging device that images a tool.

### Background Art

Examples of machine tools include a turning center in which a tool is moved relative to a rotating workpiece, a machining center in which a rotating tool is moved relative to a workpiece, and a combined machine having combined functions of a turning center and a machining center. A machine tool includes a tool changer called an automatic tool changer (ATC), and machines workpieces into desired shapes by changing tools among a plurality of kinds of tools in processes of machining. An ATC changes tools between a tool storage part (a magazine, etc.) and a tool holding part (a spindle, etc.).

In such a machine tool, when a tool after being used has an abnormality such as a fracture, a breakage, or chips entangled therearound, the tool (hereinafter also referred to as a "faulty tool") cannot be used in this state for next machining. Thus, a technology providing an imaging device that images a blade shape of a tool before and after being used to determine whether or not the tool is a faulty tool on the basis of the images before and after use has been proposed (Patent Literature 1).

In a tool test, for example, a tool is irradiated from one side thereof and imaged by an imaging unit installed on the other side thereof. The silhouette of a tool can be projected by using transmitted illumination, and the outline of the tool is identified on the basis of the silhouette. When a normal outline shape cannot be obtained, the tool can be determined to be a faulty tool.

### Related Art List

Patent Literature 1: JP 2015-131357A

### Summary

### Technical Problem

In such an imaging device, a light source and an imaging unit need to be arranged on opposite sides with respect to a tool along the optical axis. Furthermore, a sufficient distance (working distance; hereinafter referred to as "WD") between a camera, which is the imaging unit, and the tool is needed. Thus, the distance between the imaging unit and the light source included in the imaging device becomes large, which may cause a problem of the space for installation in a machine tool. In this regard, an irradiated tool itself may be imaged without using transmitted illumination, that is, a bright-field image of a tool surface may be processed. In this case, however, the amount of image information increases, which makes robust processing difficult.

### Solution to Problem

An aspect of the present invention is an imaging device. The imaging device includes: a tool support that supports a tool; a light source that irradiates the tool supported by the tool support with light; and an imaging unit that images a projection image of the tool displayed on a projection part by the light emitted from the light source.

### Advantageous Effects of Invention

The present invention provides a space-saving imaging device that takes images that can be robustly processed.

### Brief Description of Drawings

FIG. 1 is a perspective view of an external appearance of a machine tool according to an embodiment.
FIG. 2 is a side view of an internal structure of tool storage equipment.
FIG. 3 is a perspective view schematically illustrating a structure inside a storage chamber.
FIG. 4 is a front view schematically illustrating a structure around a boundary between the storage chamber and a machining chamber.
FIG. 5 is a hardware configuration diagram of the machine tool and an image processing device.
FIG. 6 is a functional block diagram of the image processing device.
FIG. 7 is a diagram schematically illustrating a method for imaging a subject tool.
FIG. 8 is a diagram schematically illustrating the method for imaging a subject tool.
FIGS. 9A to 9C are diagrams schematically illustrating the method for imaging a subject tool.
FIGS. 10A to 10E show examples of actual taken images and image processing.
FIGS. 11A and 11B show examples of actual taken images and image processing.
FIG. 12 is a flowchart illustrating a process of obtaining tool shape data.
FIG. 13 is a flowchart illustrating a tool testing process.
FIG. 14 is a diagram schematically illustrating a method for imaging a subject tool according to a modification.
FIG. 15 is a diagram schematically illustrating a method for imaging a subject tool according to another modification.

### Description of Embodiments

An embodiment of the present disclosure will now be described with reference to the drawings. A machine tool according to the embodiment is configured as a machining center for machining workpieces into desired shapes by appropriately changing tools.

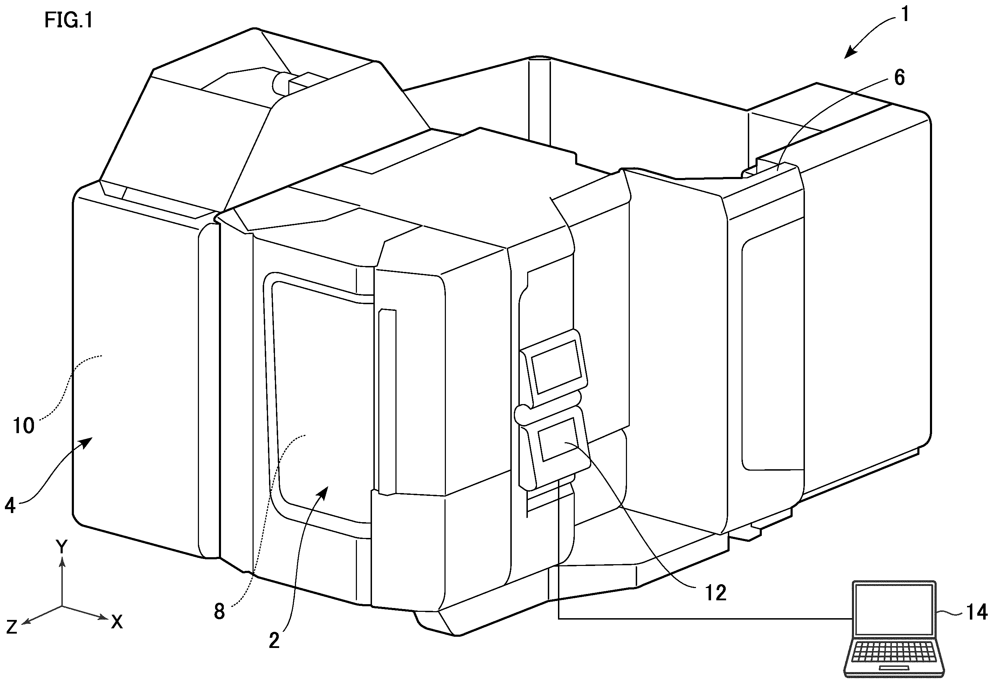

FIG. 1 is a perspective view of an external appearance of a machine tool according to an embodiment. The front-back direction, the left-right direction, and the up-down direction of the machine tool 1 as viewed from the front will be referred to as a Z-axis direction, an X-axis direction, and a Y-axis direction, respectively.

The machine tool 1 includes machining equipment 2 and tool storage equipment 4. A cover 6 (equipment housing) is provided to cover the equipment. The cover 6 contains a machining chamber 8 on the right side and a storage chamber 10 on the left side in front view. In the machining chamber 8, machining is performed by the machining equipment 2. In the storage chamber 10, a plurality of tools are stored by the tool storage equipment 4 and tool replacement is performed by an ATC, which is not illustrated (which will be described in detail later).

An operation panel 12 is located on a right side face of the cover 6. An image processing device 14 is connected to the operation panel 12. A user can remotely monitor a working status of the machine tool 1 by using the image processing device 14. The image processing device 14 may be a common laptop personal computer (PC) or tablet computer. In a modification, the image processing device may be a device inside the machining chamber 8.

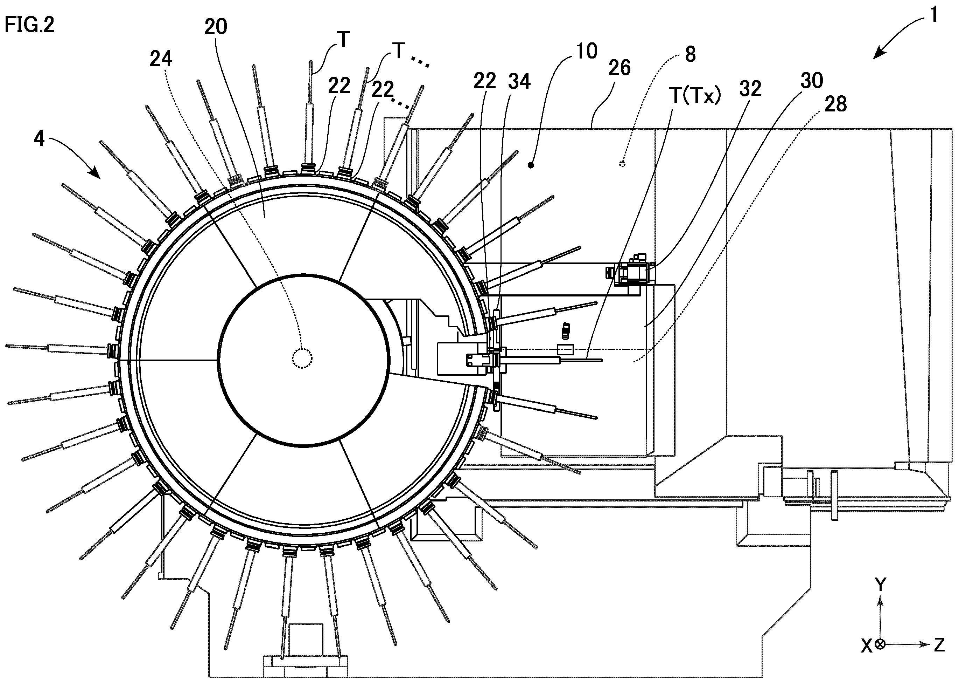

FIG. 2 is a side view of an internal configuration of the tool storage equipment 4. FIG. 2 corresponds to a left side view of the machine tool 1, and illustrates a state in which a left side face of the cover 6 is removed for convenience of explanation. In addition, a magazine (which will be described later) is illustrated in a partially cutout manner.

The tool storage equipment 4 includes a disk type magazine 20. A plurality of pots 22 are arranged along an outer circumferential face of the magazine 20, and each pot 22 can accommodate a tool T. The pots 22 each coaxially hold a tool T, and thus a plurality of tools are held radially around a rotating shaft 24 of the magazine 20. In a modification, a magazine of a chain type or other types may be used.

The magazine 20 turns around the rotating shaft 24, and horizontally supports a tool T for replacement at a front end position thereof (a right end position in FIG. 2). Specifically, the pots 22 of the magazine 20 each function as a "tool support" that supports a tool T for replacement (also referred to as a "subject tool Tx") in the storage chamber 10 in a standby state.

A partition 26 separating the storage chamber 10 from the machining chamber 8 has an opening 28, and a shutter 30 for opening and closing the opening 28 is provided. In addition, an opening/shutting mechanism 32 for moving the shutter 30 along the longitudinal direction of a subject tool Tx to open and close the opening 28 is provided. An ATC 34 is located in the storage chamber 10. The ATC 34 replaces a tool T held by a tool spindle (not illustrated) in the machining chamber 8 with a tool T held in a standby state in the storage chamber 10. Tool replacement is performed in a state in which the shutter 30 is open.

A subject tool Tx is horizontally supported as a tool for replacement in the storage chamber 10. The subject tool Tx can be a pre-use tool Tp (which will be described later) just before tool replacement, and a post-use tool Tu (which will be described later) just after tool replacement. In the present embodiment, an image of a tool as a pre-use tool Tp and an image of the tool as a post-use tool Tu are taken. The condition of the post-use tool Tu (whether the post-use tool Tu is a faulty tool, etc.) is determined on the basis of comparison between the image of the pre-use tool Tp and the image of the post-use tool Tu.

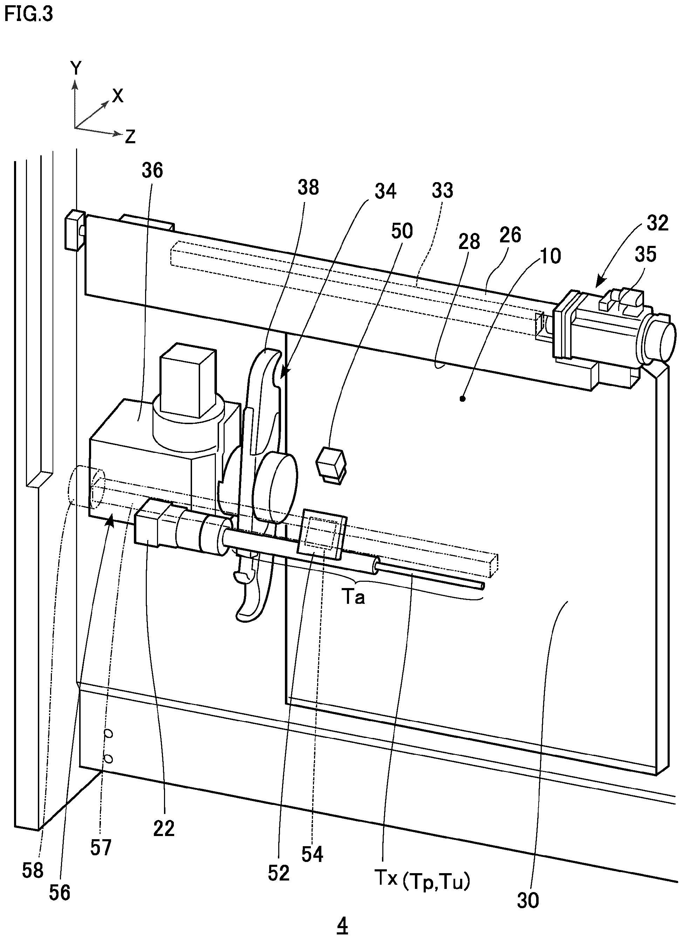

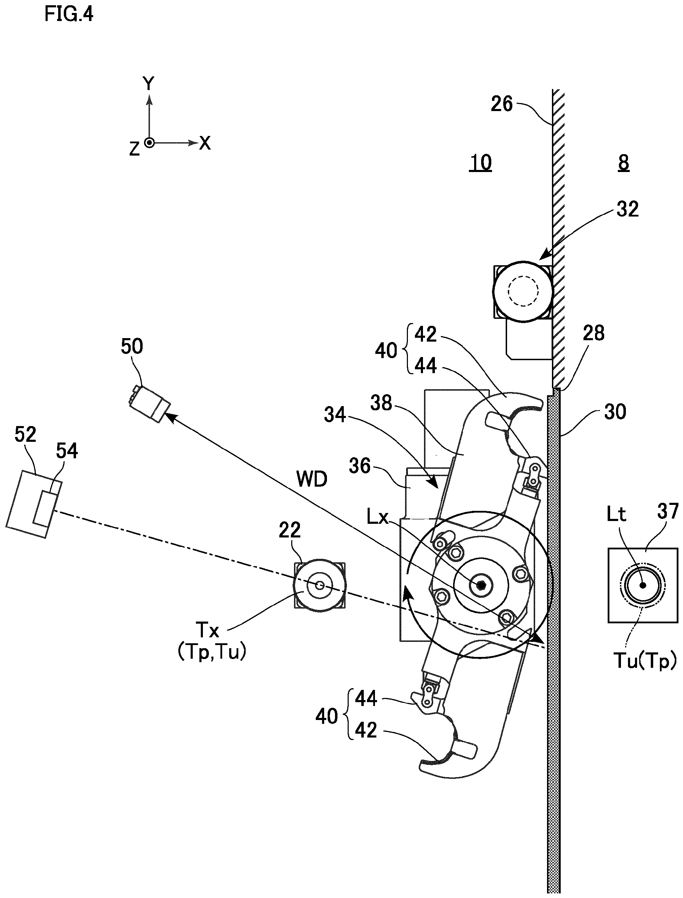

FIG. 3 is a perspective view schematically illustrating a structure in the storage chamber 10. FIG. 4 is a front view schematically illustrating a structure around the boundary between the storage chamber 10 and the machining chamber 8.

As illustrated in FIG. 3, the subject tool Tx is horizontally supported in the storage chamber 10. The shutter 30 is driven in the longitudinal direction of the subject tool Tx by the opening/shutting mechanism 32, to open and close the opening 28. Note that the "longitudinal direction" of the subject tool Tx is a direction along the axis of the pot 22 that supports the subject tool Tx in the storage chamber 10 and corresponds to the "Z-axis direction". A "short direction" of the subject tool Tx is a direction perpendicular to the longitudinal direction, and can be the "X-axis direction" or the "Y-axis direction". The opening/shutting mechanism 32 includes a feed screw mechanism 33 and a servomotor 35 for driving the feed screw mechanism 33.

As also illustrated in FIG. 4, the ATC 34 is located in a space between the subject tool Tx and the shutter 30. The ATC 34 includes a main unit 36 including a motor, and an arm 38 mounted on a rotating shaft of the motor. The arm 38 has a symmetrical shape with respect to the rotating shaft, and includes grip parts 40 at respective ends thereof. The grip parts 40 each include a fixed jaw 42 and a movable jaw 44. The grasping movement of each grip part 40 is achieved by driving the movable jaw 44.

The ATC 34 includes a translation mechanism for moving the arm 38 in the axial direction, and a rotation mechanism for rotating the arm 38 about the axis. The motor includes a first motor for driving the translation mechanism, and a second motor for driving the rotation mechanism. Because such mechanisms themselves are known, detailed description thereof is omitted herein.

While the ATC 34 is not operating, the ATC 34 is in a state in which the longitudinal direction of the arm 38 is in the up-down direction as illustrated in FIG. 4. The ATC 34 is thus accommodated in the storage chamber 10 with the shutter 30 closed. While the ATC 34 is operating, a pre-use tool Tp is in a standby state on one side (on the storage chamber 10 side) of the axis of the arm 38, and a post-use tool Tu is in a standby state on the other side (on the machining chamber 8 side) thereof. In this state, the shutter 30 is opened.

When the ATC 34 operates, the arm 38 turns, and the pair of grip parts 40 grasp the pre-use tool Tp and the post-use tool Tu. At this point, the arm 38 is temporarily located across the opening 28. When the translation mechanism and the rotation mechanism are then driven, tools are detached from and attached to the pot 22 and the tool spindle 37, and tool replacement is thus performed. Because such operation of the ATC is known, detailed explanation thereof is omitted herein.

An imaging unit 50 and a light source 52 are located slightly above a position at which the subject tool Tx is held. The imaging unit 50 is a camera including an image sensor (image pickup device) such as a complementary metal oxide semiconductor (CMOS) or a charge-coupled device (CCD). The imaging unit 50 has a resolution of about one million pixels (1224×1024), and is capable of capturing a maximum of 80 images per second.

The light source 52 includes a laser output unit 54 that outputs a highly directional line laser beam (hereinafter also simply referred to as "laser beam") (details of which will be described later). The light source 52 is located opposite the shutter 30 with respect to the subject tool Tx supported by the pot 22. The shutter 30 functions as a "projection part" onto which the subject tool Tx is projected by a laser beam emitted by the light source 52. The imaging unit 50 is located opposite the shutter 30 with respect to the subject tool Tx, and takes a projection image of the subject tool Tx to be projected onto the shutter 30.

The ATC 34 is located between the subject tool Tx supported by the pot 22 and the shutter 30. Thus, the light source 52 is positioned so that the projection of the subject tool Tx and the projection of the ATC 34 made by irradiation of laser beams do not overlap with each other. In the embodiment, the light source 52 is located at an oblique angle slightly above the subject tool Tx. In addition, the imaging unit 50 is also positioned so that a projection image of the subject tool Tx and an image of the subject tool Tx itself do not overlap with each other in the angle of view of the imaging unit 50. In the embodiment, the imaging unit 50 is located above the light source 52 and the subject tool Tx.

The distance (working distance: hereinafter also referred to as "WD") between the imaging unit 50 and the shutter 30 is set so that the projection of a portion Ta to be imaged of the subject tool Tx (see FIG. 3) can be within a screen. Note that the portion Ta to be imaged refers to a portion that needs to be tested (also referred to as a "portion to be tested") to determine whether or not the subject tool Tx is a faulty tool, and is set in advance. In the embodiment, the portion Ta to be imaged is set as a portion at least from a blade base end to a blade edge of the subject tool Tx. In a modification, the portion Ta to be imaged may be a portion from a base end supported by the pot 22 to the blade edge of the subject tool Tx.

The description refers back to FIG. 3, in which a light source driving mechanism 56 for moving the light source 52 in the longitudinal direction of the subject tool Tx is provided in the storage chamber 10. The light source driving mechanism 56 includes a feed mechanism 57 and a servomotor 58 for driving the feed mechanism 57. The feed mechanism 57 is a feed screw mechanism including a linear guide in the embodiment, or may be other feed mechanisms such as an air cylinder. The light source driving mechanism 56 drives the light source 52 (or the laser output unit 54) to scan the subject tool Tx in the longitudinal direction with a line laser beam (details of which will be described later).

As illustrated in FIG. 4, the rotation axis Lt of the tool spindle 37, the rotation axis Lx of the ATC 34, the moving direction of the shutter 30, the moving direction of the light source 52, and the longitudinal direction of the subject tool Tx at a standby position for tool replacement are designed to be parallel to each other (along the Z direction).

Although not illustrated in FIGS. 3 and 4, it is needless to say that such structures as the main unit 36 of the ATC 34, the opening/shutting mechanism 32, the light source driving mechanism 56, and the imaging unit 50 are stably fixed to such a structure as a wall surface or a beam in the storage chamber 10.

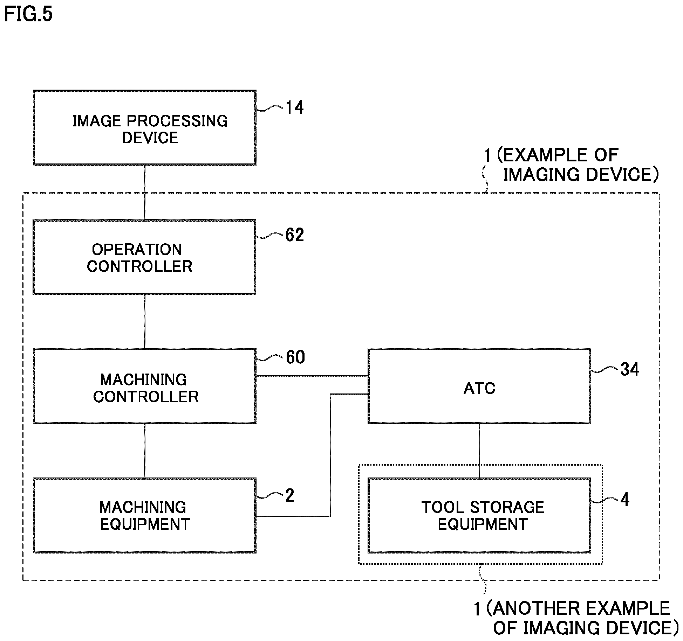

FIG. 5 is a hardware configuration diagram of the machine tool 1 and the image processing device 14.

The machine tool 1 includes a machining controller 60 and an operation controller 62 in addition to the machining equipment 2, the tool storage equipment 4, and the ATC 34 described above. The machining controller 60 functions as a numerical controller that outputs control signals to the machining equipment 2 in accordance with machining programs. The machining equipment 2 drives the tool spindle 37 to machine a workpiece in accordance with instructions from the machining controller 60. The light source 52 and the imaging unit 50 described above constitute an imaging device in the machine tool 1. The image processing device 14 processes images taken by the imaging unit 50.

The operation controller 62 includes the operation panel 12, and controls the machining controller 60. The ATC 34 takes out a tool from the tool storage equipment 4 and replaces a post-use tool Tu held on the tool spindle with the pre-use tool Tp taken out from the tool storage equipment 4 in accordance with a replacement instruction from the machining controller 60.

The image processing device 14 mainly performs image processing such as recognition of tool shapes. As described above, the image processing device 14 may be part of the operation controller 62.

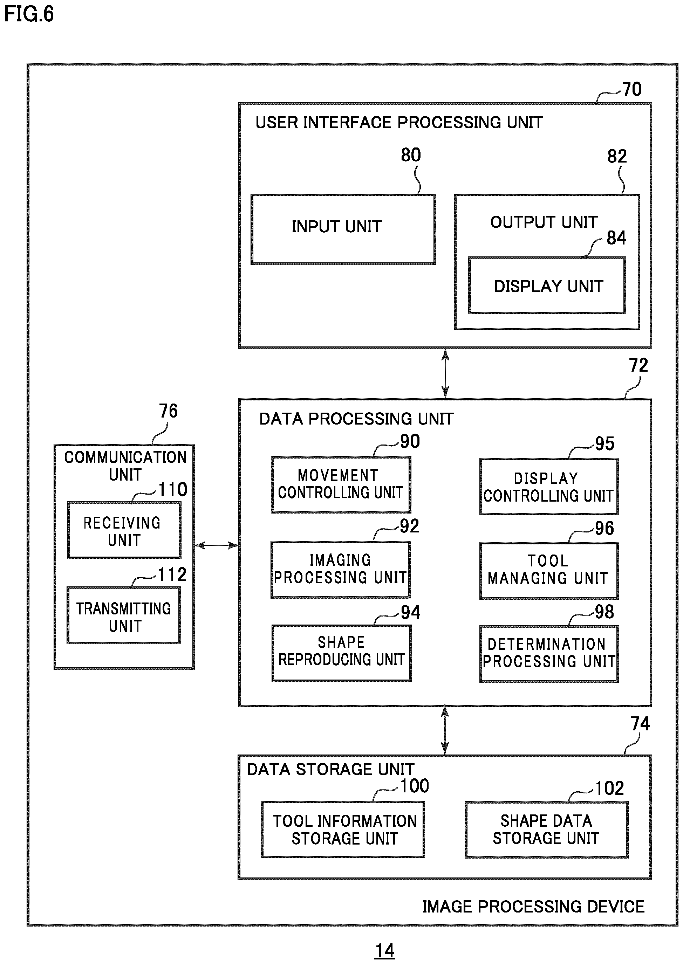

FIG. 6 is a functional block diagram of the image processing device 14.

The components of the image processing device 14 are implemented by hardware including computing units such as central processing units (CPUs) and various auxiliary processors, storage devices such as memories and storages, and wired or wireless communication lines that connect these units and devices, and software that is stored in the storage devices and supplies processing instructions to the computing units. Computer programs may be constituted by device drivers, operating systems, various application programs on upper layers thereof, and a library that provides common functions to these programs. Blocks to be described below do not refer to configurations in units of hardware but to blocks in units of functions.

Note that the components of the operation controller 62 and the machining controller 60 may also be implemented by hardware including computing units such as processors, storage devices such as memories and storages, and wired or wireless communication lines that connect these units and devices, and software that is stored in the storage devices and supplies processing instructions to the computing units. The operation controller 62 and the machining controller 60 may be configured as devices separate from the image processing device 14.

The image processing device 14 includes a user interface processing unit 70, a data processing unit 72, a data storage unit 74, and a communication unit 76.

The user interface processing unit 70 performs processes relating to user interfaces such as receiving operations made by a user, displaying images, and outputting audio. The communication unit 76 performs communication with the operation controller 62. The data processing unit 72 performs various processes on the basis of data obtained by the user interface processing unit 70 and data stored in the data storage unit 74. The data processing unit 72 also functions as an interface of the user interface processing unit 70, the data storage unit 74, and the communication unit 76. The data storage unit 74 stores various programs and set data.

The user interface processing unit 70 includes an input unit 80 and an output unit 82.

The input unit 80 receives inputs made by the user via a touch panel or a hardware device such as a handle. The output unit 82 provides the user with various information by image display or audio output. The output unit 82 includes a display unit 84. The display unit 84 performs display of taken images, display accompanying image processing, display for informing the user of occurrence of various events, and the like.

The communication unit 76 includes a receiving unit 110 that receives data from the operation controller 62, and a transmitting unit 112 that transmits data and commands to the operation controller 62.

The data processing unit 72 includes a movement controlling unit 90, an imaging processing unit 92, a shape reproducing unit 94, a display controlling unit 95, a tool managing unit 96, and a determination processing unit 98.

The movement controlling unit 90 drives and controls the opening/shutting mechanism 32 to control opening and closing of the shutter 30, and drives the light source driving mechanism 56 to control the movement of the light source 52. The imaging processing unit 92 controls the imaging unit 50 to image the projection of the subject tool Tx appearing on the shutter 30. The shape reproducing unit 94 generates "tool shape data", which are data indicating the shape of the subject tool Tx on the basis of the image. The display controlling unit 95 controls display performed by the display unit 84. The tool managing unit 96 registers a tool ID and the tool shape data in association with each other for each subject tool Tx in the data storage unit 74.

The determination processing unit 98 determines whether a subject tool Tx has an abnormality such as a fracture, a breakage, or chips entangled therearound (whether or not the subject tool Tx is a faulty tool) on the basis of the image of the subject tool Tx or on the basis of the tool shape data. When the determination processing unit 98 determines that the subject tool Tx has an abnormality, the display controlling unit 95 causes the display unit 84 to display an alert screen for informing the user of the same. The determination processing unit 98 may instruct the operation controller 62 to display the same on the operation panel 12. When a post-use tool Tu is determined to be a faulty tool, the tool managing unit 96 associates the information of being a faulty tool with the tool ID, and registers the associated information as tool information into the data storage unit 74.

The data storage unit 74 includes a tool information storage unit 100 and a shape data storage unit 102. The tool information storage unit 100 stores information (tool information) of each of the tools T accommodated in the magazine 20 in association with the tool ID. The tool information includes information such as the type, the shape, the size, and the length of each tool, for example. The tool information may further include information such as cumulative total hours of use and a cumulative total number of uses. The data storage unit 74 also temporarily stores taken images.

The tool information storage unit 100 updates the tool information each time tool replacement is performed. When a subject tool Tx is determined to be a faulty tool as described above, the tool information storage unit 100 adds the information of being a faulty tool to the tool information. After the determination, the tool managing unit 96 prohibits use of the tool T, which is a faulty tool, that is, tool replacement with the tool T as a pre-use tool Tp by the ATC 34.

The shape data storage unit 102 stores the tool shape data generated by the shape reproducing unit 94 in association with the tool ID. In the embodiment, the tool shape data are generated before and after tool replacement. Thus, for each subject tool Tx, the tool shape data of a pre-use tool Tp (hereinafter also referred to as "pre-use tool shape data") and the tool shape data of a post-use tool Tu (hereinafter also referred to as "post-use tool shape data") are stored in association with the tool ID. The determination processing unit 98 can determine whether or not a post-use tool Tu is a faulty tool by comparing the pre-use tool shape data and the post-use tool shape data of the same tool with each other.

Next, a method for imaging a tool will be explained.

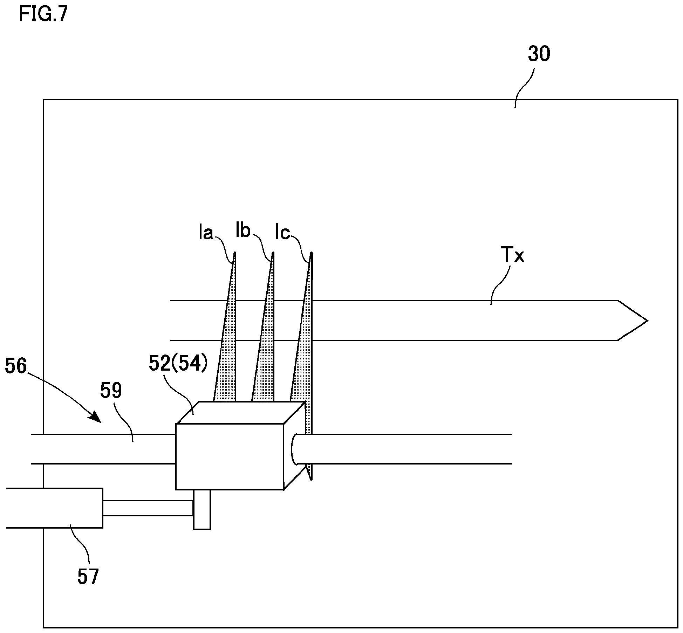

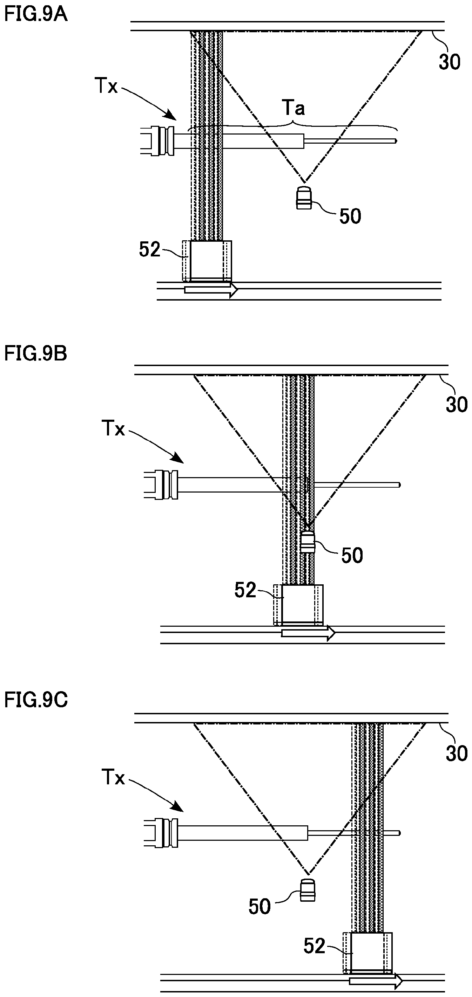

FIGS. 7 to 9C are diagrams schematically illustrating a method for imaging a subject tool Tx. FIGS. 9A to 9C illustrate processes of movement of the light source 52 as viewed from above the subject tool Tx.

As illustrated in FIG. 7, the light source driving mechanism 56 includes a guiderail 59 extending in parallel with the subject tool Tx. While being guided by the guiderail 59, the light source 52 is driven in the longitudinal direction of the subject tool Tx by the feed mechanism 57. The laser output unit 54 outputs three line laser beams la, lb, and lc in parallel with each other in the short direction of the subject tool Tx. The subject tool Tx is irradiated with these laser beams, so that the projection of the subject tool Tx appears on the shutter 30.

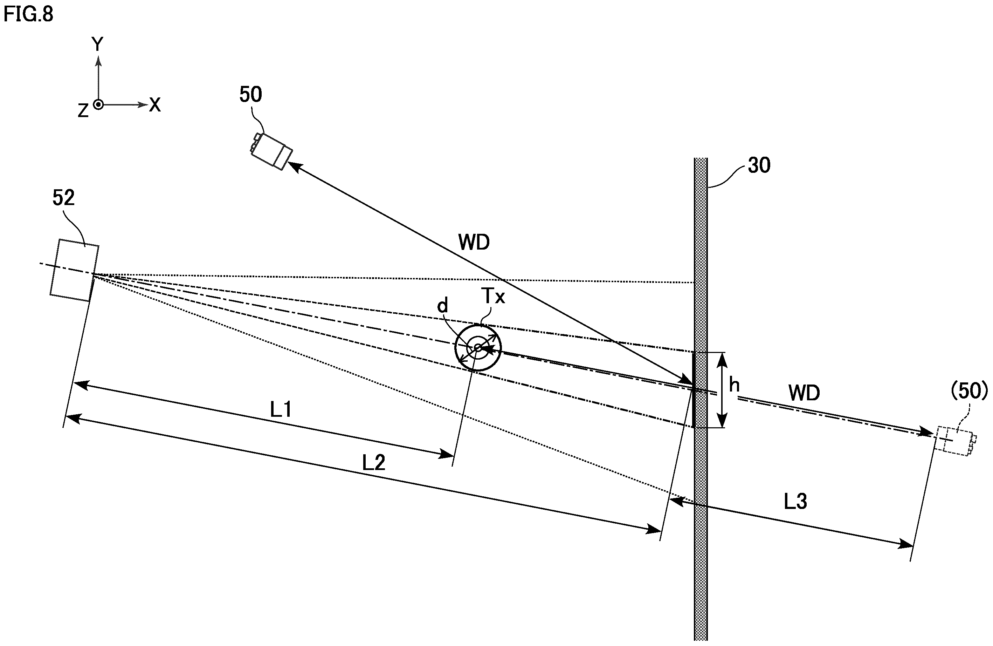

As illustrated in FIG. 8, the projection image of the subject tool Tx appearing on the shutter 30 is imaged by the imaging unit 50. Thus, the light source 52 and the imaging unit 50 are located opposite the shutter 30 with respect to the subject tool Tx. When the diameter of the subject tool Tx (tool diameter) is represented by d, the distance from the light source 52 to the subject tool Tx is represented by L1, and the distance from the subject tool Tx to the projection is represented by L2, the height h of the projection of the subject tool Tx on the shutter 30 is h = d×L2/L1. The WD of the imaging unit 50 is set so that the projection image of the portion to be imaged of the subject tool Tx becomes within the angle of view.

The imaging unit 50 illustrated by a broken line in FIG. 8 is an example (comparative example) of a configuration for imaging a silhouette of the subject tool Tx by using transmitted illumination. Assume that the WD of the imaging unit 50 according to the comparative example is the same as that in the embodiment. When the comparative example is adopted, at least a length of L2+L3 is necessary for an installation space of the imaging device, which is larger than that in the embodiment. In other words, the embodiment saves space as compared with the comparative example.

As illustrated in FIGS. 9A to 9C, for image processing of the subject tool Tx, imaging by the imaging unit 50 is performed continuously (consecutive shooting) while the light source 52 is moved in the longitudinal direction of the subject tool Tx. The position of the imaging unit 50 remains fixed. Because the three laser beams are highly directional, three projections are imaged momentarily. Because, however, imaging is performed consecutively with the light source 52 being moved, gaps between the three projections are obtained as projections by subsequent imaging (see broken lines). Thus, a projection image over the entire portion Ta to be imaged is obtained.

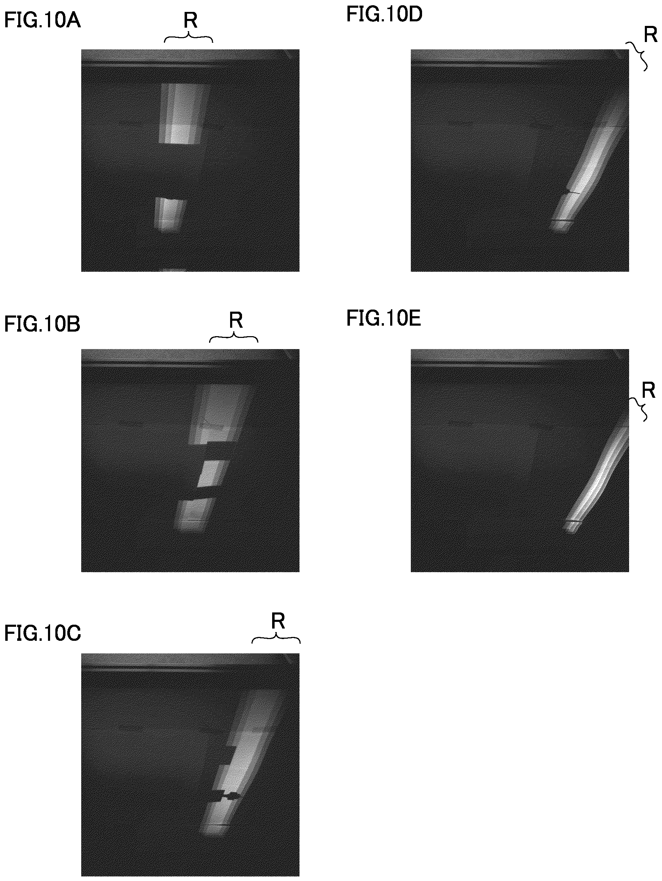

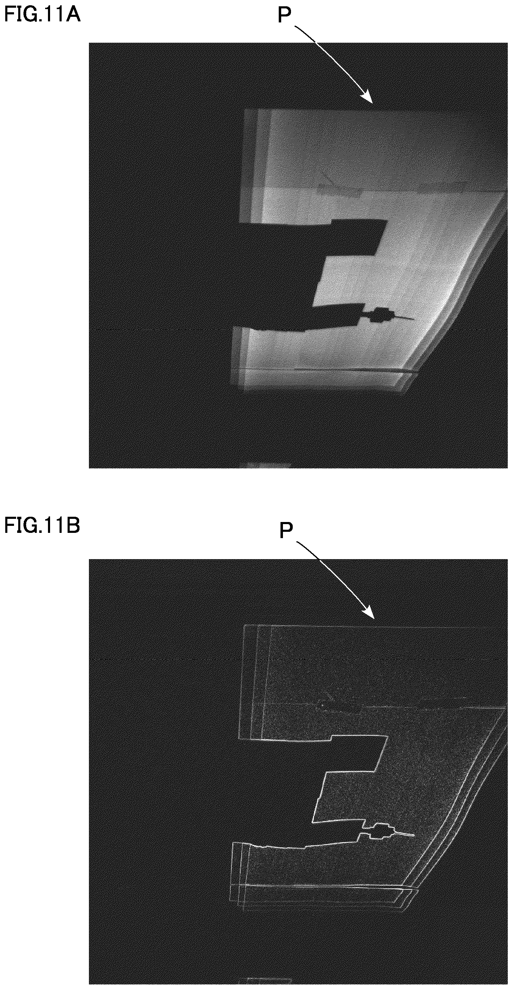

FIGS. 10A to 10E, 11A, and 11B show examples of actual taken images and image processing. FIGS. 10A to 10E show taken images (partial images) that are sequentially obtained. FIG. 11A shows a whole image combining the partial images. FIG. 11B shows edge detection in image processing.

The imaging processing unit 92 extracts, as a partial image, a region R in which a portion of the subject tool Tx projected by a laser beam, that is, a boundary between dark and light is present from each of a plurality of taken images obtained continuously (FIGS. 10A to 10E). The imaging processing unit 92 then combines the partial images to generate a whole image P (FIG. 11A). The imaging processing unit 92 further sets a scanning line in the short direction of the subject tool Tx on the whole image P, and detects, as an edge point, a point at the boundary between a dark region and a light region on the whole image P. The imaging processing unit 92 detects a plurality of edge points with the scanning line being shifted in the longitudinal direction of the subject tool Tx with a constant pitch, and connects the edge points to identify the outline of the subject tool Tx (FIG. 11B). The shape reproducing unit 94 generates tool shape data on the basis of the identified outline. In the embodiment, the image processing is performed on both of the post-use tool Tu and the pre-use tool Tp.

The determination processing unit 98 compares the pre-use tool shape data and the post-use tool shape data of the same tool with each other. The determination processing unit 98 determines that the subject tool Tx has a fracture or the like, that is, that the subject tool Tx is a faulty tool when the similarity between the pre-use tool shape and the post-use tool shape, or in particular, the similarity in the outline therebetween is a predetermined value or lower. In this case, the display unit 84 displays, for the user, an alert screen indicating that a faulty tool is detected. Alternatively, the informing unit 84 may produce sound such as buzzer sound.

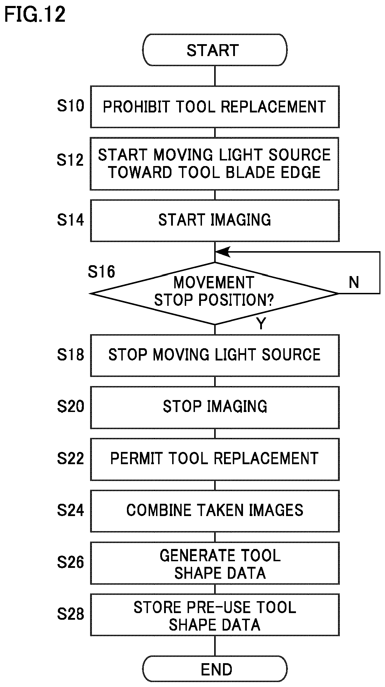

FIG. 12 is a flowchart illustrating a process of obtaining tool shape data.

This process is triggered by a pre-use tool Tp being held horizontally in a standby state in the storage chamber 10 before tool replacement. At this point, the shutter 30 is in the closed state, and the light source 52 is at a standby position. Note that the "standby position" used herein is a stop point near a base end in the longitudinal direction of the subject tool Tx, and is set in advance to include one end (the left end in FIGS. 9A to 9C) of the projection of the portion Ta to be imaged.

Prior to this process, the imaging processing unit 92 sets a predetermined tool replacement prohibition flag on (S10). This prohibits tool replacement by the ATC 34 during imaging of a pre-use tool Tp. Subsequently, the movement controlling unit 90 starts moving the light source 52 toward the tool blade edge (S12), and the imaging processing unit 92 starts imaging (consecutive shooting) by the imaging unit 50 (S14). A plurality of images obtained in this process are stored as pre-use tool images.

Then, when the light source 52 has reached a movement stop position (Y in S16), the movement controlling unit 90 stops moving the light source 52 (S18), and the imaging processing unit 92 stops imaging by the imaging unit 50 (S20). Note that the "movement stop position" used herein is a stop position near a distal end in the longitudinal direction of the subject tool Tx, and is set in advance to include the other end (the right end in FIGS. 9A to 9C) of the projection of the portion Ta to be imaged. The imaging processing unit 92 turns the tool replacement prohibition flag off (S22). As a result of the completion of imaging, the tool replacement by the ATC 34 is permitted. In other words, the process of imaging a pre-use tool Tp is performed while the tool replacement prohibition flag is on.

The imaging processing unit 92 extracts a partial image in which a boundary between dark and light is present from each of the plurality of pre-use tool images, and combines the partial images (S24). As a result, a whole image P is generated (see FIG. 11A). The shape reproducing unit 94 generates pre-use tool shape data on the basis of the whole image P (S26). The tool managing unit 96 stores the pre-use tool shape data in association with the tool ID into the shape data storage unit 102 (S28). The pre-use tool shape data is used for a tool test, which will be described later.

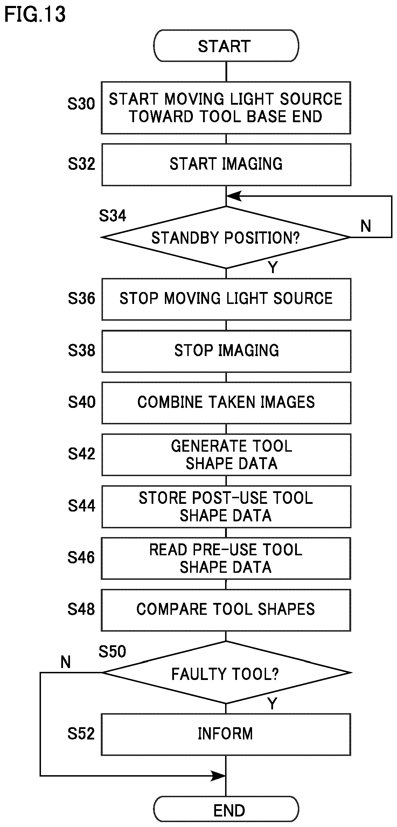

FIG. 13 is a flowchart illustrating a tool testing process.

This process is triggered by a post-use tool Tu being held horizontally in a standby state in the storage chamber 10 after tool replacement and before tool storage. At this point, the shutter 30 is in the closed state, and the light source 52 is at the movement stop position described above.

First, the movement controlling unit 90 starts moving the light source 52 toward the tool base end (S30), and the imaging processing unit 92 starts imaging (consecutive shooting) by the imaging unit 50 (S32). A plurality of images obtained in this process are stored as post-use tool images.

Then, when the light source 52 has reached the standby position described above (Y in S34), the movement controlling unit 90 stops moving the light source 52 (S36), and the imaging processing unit 92 stops imaging by the imaging unit 50 (S38). The imaging processing unit 92 extracts a partial image in which a boundary between dark and light is present from each of the plurality of post-use tool images, and combines the partial images (S40). As a result, a whole image P is generated. The shape reproducing unit 94 generates post-use tool shape data on the basis of the whole image P (S42). The tool managing unit 96 temporarily stores the post-use tool shape data in association with the tool ID into the shape data storage unit 102 (S44).

The determination processing unit 98 reads pre-use tool shape data associated with the same tool ID as the post-use tool shape data (S46), and compares these tool shape data with each other (S48). Specifically, the pre-use tool shape and the post-use tool shape of the same tool are compared with each other. If the tool is a faulty tool with the similarity between the post-use tool shape and the pre-use tool shape being a predetermine value or smaller (Y in S50), the determination processing unit 98 causes the display unit 84 to provide information of the same (S52). Specifically, the display unit 84 displays an alert screen. If the tool is not a faulty tool (N in S50), the process of S52 is skipped.

In the embodiment, a post-use tool Tu that is determined to be a faulty tool after tool replacement is also stored in the magazine 20, but the tool is prohibited from being used until predetermined maintenance is performed. The information that the tool is prohibited from being used is stored in association with the tool ID.

Typically, for each tool, upper limits of the number of uses and the hours of use (also referred to as "quality assurance parameters") are determined in order to ensure the quality thereof. Tool with a quality assurance parameter exceeding the upper limit is prohibited from being used, and another tool of the same type (sub-tool) that is additionally provided and stored in the magazine 20 is used. This prevents interruption of a mass production process of the machining equipment 2. In the embodiment, in a case where a tool is detected as a faulty tool, the tool is managed as being prohibited from being used even when the quality assurance parameters do not exceed the upper limits, and a sub-tool is used.

The machine tool 1 has been described above on the basis of the embodiment.

In the embodiment, the shutter 30 located opposite the light source 52 with respect to the subject tool Tx is the projection part. In addition, the imaging unit 50 images a projection image of a subject tool Tx projected onto the shutter 30 by light emitted from the light source 52. This relative arrangement eliminates the need for a large space in the optical axis direction of the light source 52 even when the imaging unit 50 has a relatively large WD. Furthermore, because projection images are processed, the amount of image information to be processed can be reduced. Thus, according to the embodiment, the imaging device achieves robust image processing while saving space.

In addition, the imaging device consecutively images a subject tool Tx by scanning with a plurality of line laser beams to continuously obtain projection images of a plurality of lines. Thus, even if a portion that could not be imaged momentarily within the shutter on/off operation time of a camera is present, it is possible to interpolate between the images of the plurality of lines. In other words, the relation of the intervals between the plurality of line laser beams, the moving speed of the light source 52, and the consecutive shooting speed of the imaging unit 50 is set so that the interpolation can be performed with the plurality of partial images. Thus, the partial images can be combined to obtain a whole image of the subject tool Tx with no missing portions of the projection images.

The present invention is not limited to the embodiment and modifications thereof described above, and any component thereof may be modified and embodied without departing from the scope of the invention. Components described in the embodiments and modifications may be combined as appropriate to form various embodiments. Some components may be omitted from the components presented in the embodiments and modifications.

### [Modifications]

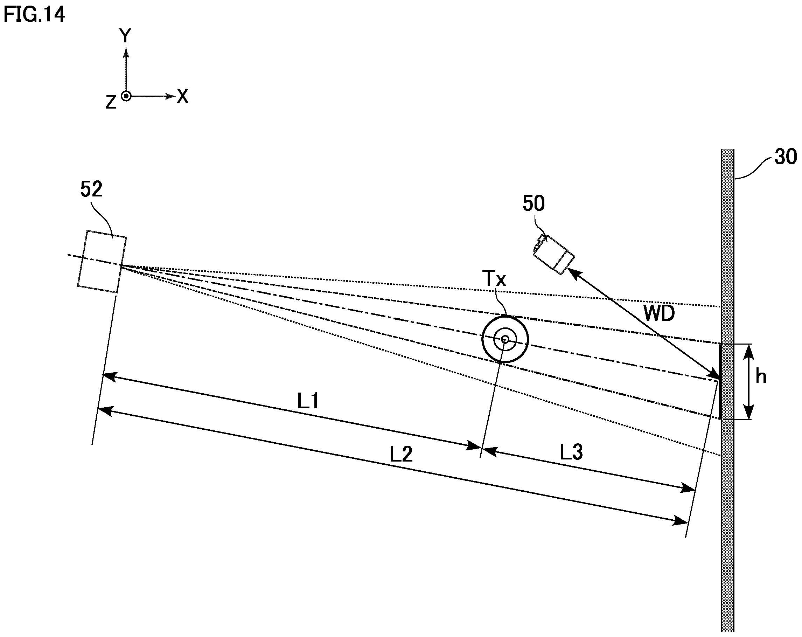

FIG. 14 is a diagram schematically illustrating a method for imaging a subject tool Tx according to a modification.

In this modification, while the light source 52 is located opposite the shutter 30 with respect to the subject tool Tx, the imaging unit 50 is located on the same side as the shutter 30 with respect to the subject tool Tx. Such an arrangement may be adopted depending on the WD of the light source 52. Even with such a configuration, space can be saved as compared with an imaging device using transmitted illumination (comparative example) (see broken lines in FIG. 8).

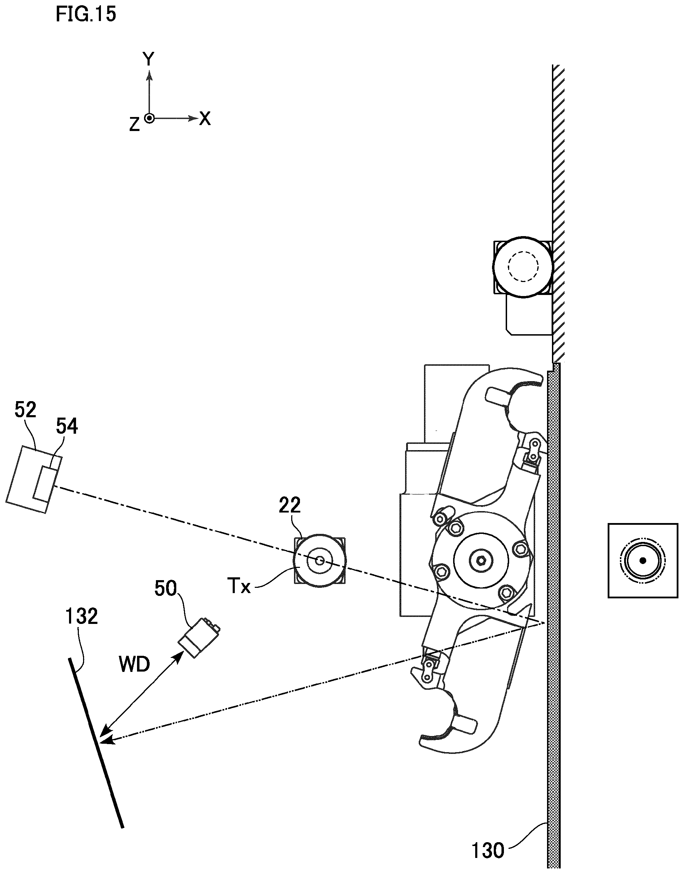

FIG. 15 is a diagram schematically illustrating a method for imaging a subject tool Tx according to another modification.

In this modification, a reflector 130 is provided on a side opposite the light source 52 with respect to subject tool Tx, and a projection part 132 is provided on the same side as the light source 52 with respect to the subject tool Tx. The reflector 130 may be a reflective member such as a mirror or may be a reflective plate or a reflective surface on the shutter 30 (see FIG. 4). The reflector 130 is located on the optical axis of the light source 52.

The projection part 132 may be a plate-like member or a side wall facing the reflector 130. A projection image of the subject tool Tx generated by irradiation of light from the light source 52 is reflected by the reflector 130 and projected on the projection part 132. The imaging unit 50 images the projection image displayed on the projection part 132. Even with such a configuration, space can be saved as compared with an imaging device using transmitted illumination (comparative example) (see broken lines in FIG. 8).

### [Other modifications]

While an example of a configuration in which three line laser beams are output from the laser output unit 54 has been presented in the embodiment described above, the number of line laser beams may be two or four or more. A plurality of line laser beams are output so that projection images of a plurality of lines are obtained. The image processing device can generate a whole image by combining all of the imaged projection images of a plurality of lines.

In the embodiment described above, an example of a configuration in which the light source driving mechanism 56 is constituted by the feed mechanism 57 and in which imaging of the subject tool Tx is performed while the laser output unit 54 is moved in the longitudinal direction of the subject tool Tx to scan with the line laser beams has been presented. In a modification, the light source driving mechanism may be a so-called oscillating mechanism that turns the laser output unit 54 about a predetermined rotation axis so that scanning of subject tool Tx is performed with line laser beams in the longitudinal direction.

In the embodiment described above, an example of a configuration in which the laser output unit 54 is moved in the longitudinal direction of the subject tool Tx so that scanning is performed with the line laser beams and the subject tool Tx is consecutively shot, that is, imaged a plurality of times has been presented. In a modification, imaging may be performed once with a longer exposure time of a camera. Performing imaging a plurality of times, however, is more advantageous in terms of the contrast. This is applicable to a case where the light source driving mechanism is an oscillating mechanism as in the aforementioned modification.

In the embodiment described above, tool length information is stored in association with a tool ID in the tool information storage unit 100. Thus, the movement controlling unit 90 may read tool information associated with the subject tool Tx, and change the amount of movement of the light source 52 depending on the tool length. In other words, each movement stop position may be set depending on the length of the subject tool Tx.

In the embodiment described above, an example of a configuration in which the determination processing unit 98 determines whether a subject tool Tx is a faulty tool has been presented. In a modification, tool shape data of a pre-use tool Tp and a post-use tool Tu generated by the shape reproducing unit 94 may be drawn and displayed on the display unit 84 in a manner in which the tool shape data can be compared. A user may determine whether or not the subject tool Tx is a faulty tool by visually comparing the tool shapes before and after use.

In the embodiment described above, imaging of each subject tool Tx is performed before and after tool replacement (that is, before and after machining) to generate tool shape data. Then, the pre-use tool shape data and the post-use tool shape data are compared with each other for each tool so that whether or not the tool has an abnormality such as a fracture or the like. In a modification, the faulty tool determination process may be performed using a tool image itself without generating tool shape data (tool outline data). Specifically, whether or not a post-use tool Tu is a faulty tool may be determined on the basis of comparison between a pre-use tool image and a post-use tool image of each subject tool Tx.

In the embodiment described above, each subject tool Tx is imaged immediately before and after machining, and the state of each post-use tool Tu (whether or not each post-use tool Tu is a faulty tool) is determined. In other words, an example in which a taken image immediately before use is used as a "reference image" for determination has been presented. In a modification, a reference image may be stored as basic data at tool registration before start of initial use of each tool.

In the embodiment described above, the imaging unit 50 and the light source 52 are arranged above the subject tool Tx as illustrated in FIG. 8. In a modification, either one of the imaging unit 50 and the light source 52 may be arranged above the subject tool Tx and the other may be arranged below the subject tool Tx. Alternatively, the light source 52 may be arranged at the same height as the subject tool Tx and the imaging unit 50 may be arranged above or below the subject tool Tx. Any arrangement in which the subject tool Tx does not interfere with imaging of projection images by the imaging unit 50 may be applied.

While the shutter 30, which is a movable member, is the "projection part" in the embodiment described above, the subject tool Tx may be projected onto an oil pan that is fixed to the equipment in an immovable manner for preventing oil, a partition plate, a side wall, a side face cover, or the like as the "projection part". Alternatively, the subject tool Tx may be projected onto a flat portion of a robot arm, which is a movable member, as the "projection part". For accurate detection of a tool edge in order to detect tool wear and the like, the portion of the projection part on which the silhouette of a tool appears preferably has a flat surface. In a case where the imaging device is used for detection of chip entanglement, detection of tool breakage, or the like, detection can be sufficiently performed through projection of the silhouette on a curved surface.

In the embodiment described above, an example in which the "display unit" is provided in the image processing device 14 has been presented. In a modification, the display screen of the operation panel 12 of the machine tool1 may be the "display unit".

Although not described in detail in the embodiment, line laser beams may have wavelengths different from that of lighting of a chamber in which the subject tool Tx is located. The laser output unit 54 may have a bandpass filter function and output line laser beams having specific wavelengths. The line laser beams may be visible light or may be ultraviolet light or infrared light.

In the embodiment described above, an example of a configuration in which each pot 22 of the magazine 20 is the "tool support" that supports the subject tool Tx in a standby state in the storage chamber 10 has been presented. In a modification, the ATC 34 (more specifically, the arm 38) may function as the "tool support". Specifically, the movement of the light source 52 and the imaging process by the imaging unit 50 may be performed with the subject tool before or after tool replacement being supported by the ATC.

While the ATC 34 has been presented as an example of a "tool conveying part" in the embodiment described above, a tool conveying mechanism for conveying tools between the machining chamber and the storage chamber without having the tool replacing function may be provided.

While an example of a machining center as the machine tool 1 has been presented in the embodiment, it is needless to say that the tool testing technology described above is also applicable to turning centers and combined machines.

In the embodiment described above, an example in which the imaging device is the machine tool 1 has been presented. The imaging device, however, is not limited thereto. For example, the imaging device may be the tool storage equipment (see FIG. 5). In a case where the tool storage equipment is the imaging device, a side wall or the like of the tool storage equipment serves as the projection part.

Although not mentioned in the embodiment described above, when the imaging device (see FIG. 8) has a small WD, the distance between the imaging unit 50 (see solid lines) and the shutter 30 may be smaller than the distance L3 between the imaging unit 50 (see broken lines) and the shutter 30 in the comparative example.

In addition, the angle between a line connecting the center of the subject tool Tx and the light source 52 and a line connecting an intersecting point of the projection part with the former line and the imaging unit 50 is preferably in a range of 5° to 15°. Furthermore, the imaging unit 50 may be located in a light irradiation area of the light source 52 (the inner side of dotted lines in FIG. 8.

This application claims priority to Japanese Patent Application No. 2022-020155 filed on February 14, 2022, which is incorporated herein by reference in its entirety.

## Claims

1. An imaging device comprising:
a tool support that supports a tool;
a light source that irradiates the tool supported by the tool support with light; and
an imaging unit that images a projection image of the tool displayed on a projection part by the light emitted from the light source.

2. The imaging device according to claim 1, wherein
the projection part is located opposite the light source with respect to the tool supported by the tool support.

3. The imaging device according to claim 1, further comprising:
a laser output unit, being the light source, that outputs a line laser beam; and
a light source driving mechanism that drives the laser output unit to perform scanning with the line laser beam in a longitudinal direction of the tool, wherein
the imaging unit images the projection image along with the scanning with the line laser beam.

4. The imaging device according to claim 3, wherein
the light source driving mechanism moves the laser output unit in the longitudinal direction of the tool, and
the imaging unit images the projection image along with the movement of the laser output unit.

5. The imaging device according to claim 3, further comprising:
a display unit that displays a shape of the tool obtained through processing of the projection image, wherein
the display unit displays, as the shape of the tool, a whole image obtained by combining a plurality of imaged projection images.

6. Tool storage equipment comprising:
a tool support that supports a tool;
a light source that irradiates the tool supported by the tool support with light; and
an imaging unit that images a projection image of the tool displayed on a projection part by the light emitted from the light source.

7. A machine tool comprising:
a tool support that supports a tool;
a light source that irradiates the tool supported by the tool support with light; and
an imaging unit that images a projection image of the tool displayed on a projection part by the light emitted from the light source.

8. The machine tool according to claim 7, wherein
the projection part is located opposite the light source with respect to the tool supported by the tool support.
